# EUROPÄISCHE PATENTSCHRIFT

(11) **EP 0 402 304 B1**
(45) Veröffentlichungstag und Bekanntmachung des Hinweises auf die Patenterteilung: **07.02.1996**
(21) Anmeldenummer: 90730008.1
(22) Anmeldetag: 01.06.1990
(51) Int. Cl.: C09K 5/06

(54) **Latentwärmespeichermittel und deren Verwendung**
Latent heat storage materials and their use
Matériaux accumulateurs de chaleur latente et leur utilisation

(30) Priorität: 06.06.1989 DE 3918371; 12.12.1989 DE 3940985
(43) Veröffentlichungstag der Anmeldung: 12.12.1990
(73) Patentinhaber: Hörmansdörfer, Gerd, D-31303 Burgdorf (DE)
(72) Erfinder: Hörmansdörfer, Gerd, D-31303 Burgdorf (DE)
(74) Vertreter: Eikenberg & Brümmerstedt Patentanwälte

(56) Entgegenhaltungen:
- FR-A- 2 419 967
- JAPANESE PATENT OFFICE, FILE SUPPLIER JAPS, Tokyo, JP; & JP-A-59 115 991 (MATSUSHITA DENKI SANGYO K.K.)
- JAPANESE PATENT OFFICE, FILE SUPPLIER JAPS, Tokyo, JP; & JP-A-62 214 268 (HITACHI HEATING APPLIANCE CO., LTD)

## Beschreibung

Die Erfindung betrifft Latentwärmespeichermittel auf der Basis von Strontiumhydroxid-Octahydrat oder Lithiumhydroxid-Monohydrat. Weiterhin umfaßt die Erfindung auch vorteilhafte Verwendungen dieser Latentwärmespeichermittel.

Latentwärmespeichermittel (auch als Phase Change Materials oder PCM bezeichnet) werden in zahlreichen Wärmeübertragungsprozessen als Mittel zur Wärmespeicherung eingesetzt. Sie sind Substanzen mit einem im Bereich der Arbeitstemperatur des Wärmeübertragungsprozesses liegenden Schmelzpunkt, so daß sie beim Erwärmen vom festen in den geschmolzenen Zustand übergehen und beim Abkühlen wieder in den festen Zustand zurückkehren, also auch latente Wärme (Schmelzwärme bzw. Kristallisationswärme) aufnehmen und wieder abgeben. Ihre Aufheizkurven weisen daher nach einem anfänglichen Temperaturanstieg ein Temperaturplateau in Höhe der Schmelztemperatur (und damit im Bereich der Arbeitstemperatur des Wärmeübertragungsprozesses) auf, ehe nach dem vollständigen Aufschmelzen eine weitere Temperaturerhöhung eintritt. Umgekehrt verharren sie während des Abkühlens eine entsprechende Zeitspanne auf der Erstarrungstemperatur, bis die latente Wärme vollständig abgegeben ist. Da die latente Wärme im allgemeinen etwa das Ein- bis Zweihundertfache der spezifischen Wärme der betreffenden Substanz ausmacht, haben Latentwärmespeichermittel somit im Vergleich zu sog. Kapazitätsspeichermitteln (d.h. solchen, bei denen sich der Aggregatzustand im Bereich der Arbeitstemperatur nicht ändert) den bedeutenden Vorteil, daß sie die Speicherung einer größeren Energiemenge in einem engen Temperaturbereich bei relativ kleinem Volumenbedarf ermöglichen.

Generell sollten Latentwärmespeichermittel eine möglichst hohe Schmelzenthalpie aufweisen, wobei es in der Regel auf die volumenspezifische (also auf das Volumen bezogene) Schmelzenthalpie ankommt, um pro Volumeneinheit des zur Verfügung stehenden Speicherraums ein Höchstmaß an Speicherkapazität zu schaffen. Daneben müssen Latentwärmespeichermittel zyklenfest sein, d.h. der Phasenübergang fest-flüssig-fest muß über lange Zeiträume hinweg reversibel reproduzierbar bleiben und darf nicht durch chemische Umsetzungen, Entmischungen, Abspaltung von Kristallwasser oder dergleichen Vorgänge beeinträchtigt werden. Weitere wichtige Kriterien können noch das Erstarrungsverhalten (z.B. die Bildung einer metastabilen Schmelze, das Ausmaß einer Volumenänderung beim Phasenübergang oder die Kristallisationsform) sein, ferner die Verträglichkeit mit den Konstruktionswerkstoffen, die physiologische Unbedenklichkeit und die Verfügbarkeit zu einem akzeptablen Preis. Es sind zwar bereits zahlreiche Latentwärmespeichermittel bekannt, die z.B. auf Hydroxid-Hydraten, Salzhydraten, Salzmischungen, tiefschmelzenden Metallegierungen oder auch organischen Verbindungen basieren, aber es hat sich bislang als schwierig erwiesen, solche Latentwärmespeichermittel zu finden, bei denen die Gesamtheit der geforderten Kriterien in einer für das jeweilige Einsatzgebiet optimalen Weise erfüllt ist.

Typische Einsatzgebiete für Latentwärmespeichermittel sind die Bereiche der Nutzwärmespeicherung für die Raumheizung (z.B. in Verbindung mit Solarkollektoren oder auch Wärmepumpen) oder in industriellen Prozessen, wenn anderweitig nutzbare Abwärme gespeichert werden soll, oder Wärmereserven für die Spitzenlastdeckung bereitgehalten werden müssen. Aber auch für andere, mehr spezielle Anwendungsfälle werden Latentwärmespeichermittel eingesetzt, beispielsweise in Vorwärmgeräten für Kraftfahrzeuge, in thermischen Kontrolleinrichtungen in Satelliten, oder in Hitzeschutzsystemen für Meßelektronik z.B. in industriellen Prozessen oder auch für Bohrlochsonden in der Geophysik. Für diese und andere Einsatzgebiete besteht nach wie vor ein Bedarf an verbesserten Latentwärmespeichermitteln, welcher einerseits in der Unzulänglichkeit der bisher eingesetzten Substanzen, andererseits in dem Streben nach ständiger Verbesserung begründet ist. Insbesondere durch den Zwang, einen möglichst hohen Energiegehalt in einem vorgegebenen Volumen unterzubringen, werden Latentwärmespeichermittel benötigt, deren volumenspezifische Speicherkapazität die physikalischen Grenzen erreicht.

Nach bisheriger Ansicht sind sowohl für organische, als auch anorganische Substanzen im Temperaturbereich bis zu etwa 130 °C maximale Energiedichten der Schmelzenthalpie von bis zu ca. 300 J/cm³ zu erwarten (siehe: Dr. P. Kesselring, Zur Energiedichte im Latentwärmespeicher - einige grundsätzliche Überlegungen, VDI-Berichte Nr. 288, 1977). Eigene Untersuchungen ergaben jedoch, daß aus rein physikalischen Gründen Maximalwerte der volumenspezifischen Schmelzenthalpie möglich sind, welche bei beliebigen Schmelztemperaturen etwa dem Wert der Schmelztemperatur der Substanz in Grad Kelvin, multipliziert mit einem Faktor knapp oberhalb von 2, entsprechen, so daß z.B. eine Substanz mit der Schmelztemperatur 85 °C (entsprechend ca. 358 °K) im günstigsten Fall eine Schmelzenthalpie von ungefähr 720 - 730 J/cm³ erreichen könnte.

Genau diesen "Traumwert" besitzt Strontiumhydroxid-Octahydrat, das zusammen mit Bariumhydroxid-Octahydrat bereits in der JP-A 76-97584 als Latentwärmespeichermittel vorgeschlagen wurde. Für diese Substanz existieren in der Literatur verschiedene Angaben zum Schmelzpunkt, die sich jedoch als unzutreffend ergeben haben. Eigene Untersuchungen führten zu dem Ergebnis, daß die reine Substanz bei einer Schmelztemperatur von 85,0 °C eine Schmelzenthalpie von 382 J/g, eine spezifische Wärme von 1,65 J/g/K im festen und von 3,2 J/g/K im flüssigen Zustand besitzt. Mittels der in der Literatur angegebenen Dichte von 1,91 g/cm³ errechnet sich so die volumenspezifische Schmelzenthalpie zu 730 J/cm³, die auf das Volumen bezogene spezifische Wärme zu 3,15 J/cm³/K im festen und zu 6,11 J/cm³/K im flüssigen Zustand. Im gesamten Temperaturbereich vom absoluten Nullpunkt bis hinauf zu etwa 250 °C wurden bislang keine höheren volumenspezifischen Werte gefunden.

Mit Lithiumhydroxid-Monohydrat ist eine weitere Substanz mit fast so hoher Schmelzenthalpie bekannt, für die nach eigenen Untersuchungen eine Schmelztemperatur von 106,8 °C und die Schmelzenthalpie von 465 J/g bestimmt wurde. Aufgrund des aus der Literatur entnommenen Wertes für die Dichte von 1,51 g/cm³ erreicht die volumenspezifische Schmelzenthalpie den ebenfalls sehr hohen Wert von 702 J/cm³.

Die herausragenden kalorischen Werte des Strontiumhydroxid-Octahydrats bzw. des Lithiumhydroxid-Monohydrats sind vermutlich sowohl in den Größenverhältnissen der einzelnen Atome und der optimalen Packung innerhalb des Moleküls, als auch in der optimalen Ausbildung von Wasserstoffbrücken mit den acht Wassermolekülen bzw. mit dem einen Wassermolekül begründet. Allerdings dürfte die beim Erwärmen unter Wärmeaufnahme eintretende Verflüssigung und die beim Abkühlen unter Wärmeabgabe eintretende Verfestigung kein Schmelzen/Erstarren im klassischen Sinne sein, sondern in erster Linie auf einer Phasenumwandlung beruhen, bei der das Hydratwasser ganz oder zumindest größtenteils unter Wärmeaufnahme freigegeben und unter Wärmeabgabe wieder aufgenommen wird. Da sich aber in der Praxis der Begriff "schmelzen" auch im Zusammenhang mit Latentwärmespeichermitteln auf Hydratbasis eingebürgert hat, wird die entsprechende Terminologie in der vorliegenden Beschreibung auch für den Fall der besagten Phasenumwandlung benutzt.

In bezug auf die physiologische Bedenklichkeit ist Strontiumhydroxid-Octahydrat lediglich als "reizend" eingestuft und scheint somit unter den Hydroxiden die am wenigsten gefährdend wirkende Substanz zu sein. Ein MAK-Wert wurde nicht festgelegt. In den Sicherheitsratschlägen wird empfohlen, den Staub nicht einzuatmen, die Berührung mit den Augen oder der Haut zu vermeiden, bzw. gegebenenfalls mit viel Wasser abzuwaschen. Für die vorgesehene technische Anwendung ist die Einstufung der Substanz relativ günstig, weil damit andere Substanzen mit wesentlich höherem Gefahrenpotential unter Umständen ersetzt werden können. Allerdings wurde bisher angenommen, daß die Substanz ebenso wie die anderen Hydroxid-Hydrate stark korrosiv gegen Aluminium, Silizium und deren Legierungen wirkt, so daß entsprechende Vorkehrungen zu treffen wären, um den Kontakt mit den genannten Metallen zu vermeiden.

Von Lithiumhydroxid-Monohydrat ist bekannt, daß es ausgesprochen stark ätzend wirkt. Die Verträglichkeit mit Konstruktionswerkstoffen ist weitgehend eingeschränkt. Seine Verwendung als Latentwärmespeichermittel dürfte sich daher auf bestimmte Sonderanwendungen beschränken, wo diese Eigenschaften akzeptiert werden können.

Leider liegen nun Gründe vor, welche bislang in der Praxis eine Verwendung sowohl von Strontiumhydroxid-Octahydrat als auch von Lithiumhydroxid-Monohydrat als Latentwärmespeichermittel behindert haben. Diese beiden Substanzen schmelzen nämlich stark peritektisch bzw. so inkongruent, daß eine Aufspaltung in gesonderte Phasen erfolgt. Dieser Vorgang kann auch damit beschrieben werden, daß das kristallwasserfreie bzw. kristallwasserärmere Hydroxid in dem abgespaltenen Kristallwasser praktisch unlöslich ist. Da die gesonderten Phasen unterschiedliche Dichten besitzen, haben sie die Tendenz zur Entmischung. Dabei sinken die Phasen mit größerer Dichte, im wesentlichen also das Hydroxid, zu Boden, während sich die leichteren Phasen, deren wesentlicher Bestandteil das abgespaltene Kristallwasser ist, darüber ansammeln. Bei der Rekristallisation kann dieses Kristallwasser nicht mit der erforderlichen Geschwindigkeit wieder eingebaut werden, so daß die Wärmeabgabe bei der Rückreaktion eingeschränkt ist. Ohne unterstützende Maßnahmen ist im Falle von Strontiumhydroxid-Octahydrat für die vollständige Wiederaufnahme des Kristallwassers je nach Schichthöhe von Zeiten bis zu etwa zwei Tagen auszugehen. Daher ist für die praktische Verwendung bisher eine mechanische Unterstützung der Rück-Vermischung der Phasen erforderlich, welche z.B. durch Umpumpen, Rühren, Schütteln oder dergleichen realisiert werden muß, zusätzlichen Aufwand bedeutet und in den meisten Anwendungsfällen gar nicht durchgeführt werden kann.

Es ist das Ziel der Erfindung, Strontiumhydroxid-Octahydrat und Lithiumhydroxid-Monohydrat in solcher Form verfügbar zu machen, daß sich Latentwärmespeichermittel ergeben, die ohne bzw. ohne nennenswerte Entmischung schmelzen und die zugleich einen breiteren Bereich an Schmelztemperaturen überdecken.

Ausgehend von den genannten beiden Hydroxid-Hydraten wird dieses Ziel erfindungsgemäß dadurch erreicht, daß einem dieser beiden Hydroxid-Hydrate mindestens ein Salz aus der Gruppe der nicht-hydratbildenden Chloride und Nitrate von Alkalimetallen und/oder das andere Hydroxid-Hydrat zugesetzt sind, wobei die Zusatzmengen an dem anderen Hydroxid-Hydrat im Bereich von 40 - 60 Mol%, bezogen auf die Menge des ersten Hydroxid-Hydrats, liegen und die Zusatzmengen an Salz von 5 bis 40 Gew.%, bezogen auf die Gesamtmenge an Hydroxid-Hydrat, betragen.

Die nicht-hydratbildenden Salze müssen eine gute Wasserlöslichkeit besitzen und sind vorzugsweise Kaliumchlorid und Natriumchlorid mit bevorzugten Zusatzmengen von 5 - 25 Gew.% sowie Kaliumnitrat und Natriumnitrat mit bevorzugten Zusatzmengen von 20 - 40 Gew.%.

Der Erfindung liegt die überraschende Erkenntnis zugrunde, daß Strontiumhydroxid-Octahydrat und Lithiumhydroxid-Monohydrat sowohl miteinander als auch einzeln oder gemeinsam mit den genannten Salzen mischbar sind und diese Mischungen ohne die bei den reinen Substanzen eintretende Entmischung schmelzen bzw. solche Entmischungen nur noch in einem nicht mehr störenden Ausmaß zeigen. In der Regel weisen diese Mischungen eutektische oder invariante Schmelzpunkte auf, welche somit je nach Mischung die Auswahl einer Reihe verschiedener Schmelztemperaturen oder Schmelzbereiche erlauben. Besonders erstaunlich ist, daß diese Mischungen durchweg ausgesprochen hohe Schmelzenthalpien besitzen, welche nicht sehr viel niedriger liegen als die des reinen Strontiumhydroxid-Octahydrats bzw. Lithiumhydroxid-Monohydrats. Dadurch wird mit diesen Mischungen eine große Anzahl von Speichersubstanzen zur Verfügung gestellt, welche bei einem hohen Niveau der Schmelzenthalpie einen breiten Temperaturbereich überdecken und trotz eines teilweise inkongruenten Schmelzverhaltens eine vorteilhafte Verwendung in allen Latentwärmespeichern erlauben.

Ein zusätzlicher Vorteil der erfindungsgemäß vorgeschlagenen Mischungen liegt in der Ausbildung eines sehr feinen Gefüges der erstarrten Mischung, wodurch die nachteilige und hinderliche Grobkristallisierung, wie sie von den reinen Substanzen her bekannt ist, zuverlässig unterbunden wird.

Der physikalische Hintergrund für den Erfolg der Erfindung ist noch nicht geklärt. Vermutlich spielt dabei eine Rolle, daß durch die Zumischung der erfindungegemäß vorgesehenen Salze mit einer hohen Löslichkeit in Wasser das vom Strontiumhydroxid-Octahydrat bzw. Lithiumhydroxid-Monohydrat beim Schmelzen abgespaltene Kristallwasser von diesem Salz sozusagen aufgenommen und dadurch die Entmischung beherrscht wird. Wenn dieses Salz in fein verteilter Mischung, vorzugsweise in einem eutektischen oder quasieutektischen Mischungsverhältnis mit dem Strontiumhydroxid-Octahydrat bzw. dem Lithiumhydroxid-Monohydrat vorliegt, müßte das vom Strontiumhydroxid-Octahydrat und/oder vom Lithiumhydroxid-Monohydrat abgespaltene Kristallwasser aufgrund der mit dem Salz eingegangenen Lösung ebenfalls in feiner Verteilung in der Mischung eingelagert sein. Unter der Voraussetzung einer entsprechend ausreichenden Bindungskraft und nicht zu großer Dichteunterschiede zwischen den Mischungsbestandteilen könnte es so möglich sein, eine derartige Mischung vor der Entmischung zu bewahren. Wenn nun wiederum die zugemischten anorganischen Salze ihrerseits keine feste Bindekraft zu Wasser besitzen, also selbst mit Wasser kein Hydrat bilden können, so müßte es beim Absenken der Temperatur und der dadurch ausgelösten Rückreaktion des Wiederanlagerns des Kristallwassers an das Strontiumhydroxid und/ oder Lithiumhydroxid dazu kommen, daß dieses Wasser von dem zugemischten Salz bereitwillig wieder hergegeben wird.

Bei im Ergebnis gleicher Wirkung zeigen die Mischungen je nach dem Anion des Salzes ein unterschiedliches Verhalten. Nitrate führen zu Mischungen, die zwar ein inkongruentes Schmelzverhalten besitzen und dabei Kristallwasser abspalten, dieses Kristallwasser jedoch bei der Rekristallisation in vertretbar kurzer Zeit wieder vollständig einbauen. Ähnlich verhalten sich übrigens auch Mischungen aus Strontiumhydroxid-Octahydrat und Lithiumhydroxid-Monohydrat (wobei hier die physikalischen Hintergründe derzeit noch relativ offen sind) und quasiternäre Systeme aus Strontiumhydroxid-Octahydrat, Lithiumhydroxid-Monohydrat und einem der Salze.

Mischungen mit Chloriden hingegen zeigen ein ganz anderes Verhalten, das sich anschaulich am besten als "trockenes Schmelzen" bezeichnen läßt. Offenbar sind bei chloridhaltigen Mischungen die zuvor beschriebenen Vorgänge in einer derart extremen Weise ausgeprägt, daß bei Erreichen einer bestimmten quasieutektischen Temperatur ein Schmelzvorgang im üblichen Sinne überhaupt nicht mehr zu beobachten ist. Die Abspaltung des Kristallwassers vom Strontiumhydroxid-Octahydrat bzw. vom Lithiumhydroxid-Monohydrat und die Aufnahme durch die Chloride läuft derart synchron und vollständig ab, daß auch nach Überschreiten des Schmelzpunkts eine relativ feste Masse mit einer leicht teigigen Konsistenz vorliegt, deren Volumen sich von dem Volumen des Hydroxid-Hydrats nur geringfügig unterscheidet. Zur weiteren Überraschung besitzen diese Mischungen einen merklich herabgesetzten Dampfdruck, so daß das Abdampfen von Wasser, wie es z.B. beim reinen Strontiumhydroxid-Octahydrat im Bereich um 100 °C zu beobachten ist, deutlich vermindert ist.

Diese Ergebnisse sind erstaunlicherweise auf Bariumhydroxid-Octahydrat nicht übertragbar, zumindest was die Zumischung der Chloride anbetrifft. Bariumhydroxid-Octahydrat gleicht zwar in seinem Molekülaufbau dem Strontiumhydroxid-Octahydrat, besitzt aber ein anderes Schmelzverhalten. Es gehört an sich zwar auch zu den inkongruent unter Entmischung schmelzenden Hydroxid-Hydraten, ist aber in dem abgespaltenen Kristallwasser so gut löslich, daß der Schmelzvorgang allgemein als nahezu kongruent angesehen wird. Eigene Untersuchungen ergaben, daß Mischungen von Natrium- oder Kaliumchlorid mit Bariumhydroxid-Octahydrat zu extrem peritektischen Systemen mit breiten und weit über die Schmelztemperatur des reinen Bariumhydroxid-Octahydrats hinausreichenden Schmelzbereichen führen.

In den Fällen der Zumischung von Natriumchlorid und/ oder Kaliumchlorid zu Strontiumhydroxid-Octahydrat und zu Lithiumhydroxid-Monohydrat kann die beschriebene Erscheinung des "trockenen Schmelzens" derart stark sein, daß es unter Umständen von Vorteil ist, z.B. zur Verbesserung des Einfüllens in ein Behältnis, zwecks besserer Verdichtung in einem solchen Behältnis, oder auch um einen besseren Kontakt mit den wärmeübertragenden Flächen zu gewährleisten, die Mischung mit einem geringen Wasserüberschuß (in der Größenordnung bis zu 5 Gew.%, bezogen auf die Mischung) anzusetzen.

Nachfolgend wird die Erfindung anhand von Ausführungs- und Anwendungsbeispielen näher erläutert. Hierzu wurden aus
Strontiumhydroxid-Octahydrat
Lithiumhydroxid-Monohydrat
Natriumnitrat
Kaliumnitrat
Kaliumchlorid und
Natriumchlorid
zahlreiche quasibinäre und quasiternäre Mischungen hergestellt, auf ihr Schmelz- und Erstarrungsverhalten überprüft und in einem Differentialkalorimeter auf ihre kalorischen Werte untersucht. In der beigefügten Tabelle sind die Daten der reinen Substanzen sowie die entsprechenden Daten von ausgewählten Mischungsbeispielen - nach aufsteigenden Schmelzpunkten geordnet - zusammengestellt. Alle Mischungen weisen, wie zuvor beschrieben, zwar nicht das gleiche, aber in jedem Fall ein zuverlässiges, für die Praxis voll akzeptables Schmelz- und Erstarrungsverhalten auf und besitzen, wie aus der Tabelle hervorgeht, ausgesprochen hohe volumenspezifische Schmelzenthalpien, die nahe an diejenigen der reinen Hydroxid-Hydrate heranreichen. Die Schmelzpunkte der Mischungen liegen unterhalb derjenigen der reinen Hydroxid-Hydrate, was allgemein erwünscht ist.

Die in der Tabelle zusammengestellten Beispiele lassen sich mehreren Gruppen zuordnen, nämlich
1.) Mischungen aus einem der beiden Hydroxid-Hydrate mit Chloriden,
2.) Mischungen aus einem der beiden Hydroxid-Hydrate mit Nitraten,
3.) Mischungen aus einem der beiden Hydroxid-Hydrate mit Chloriden und Nitraten,
4.) Mischungen aus den beiden Hydroxid-Hydraten miteinander, und
5.) Mischungen aus den beiden Hydroxid-Hydraten miteinander und mit einem oder mehreren der Salze.

Von diesen Gruppen weisen, wie in der Tabelle vermerkt ist, nur die in die erste Gruppe fallenden Mischungen das Verhalten des "trockenen Schmelzens" auf, während die Mischungen der anderen Gruppen inkongruent schmelzen, aber vertretbar kurz und gut reproduzierbar rekristallisieren. Die Mischungen aus der ersten Gruppe sind in vielen Fällen wegen ihres besonderen, von der Norm völlig abweichenden Schmelzverhaltens zu bevorzugen, insbesondere wenn die beim Abkühlen abgegebene Wärme sofort zur Verfügung stehen muß oder wenn Speicher mit großer Masse zu befüllen sind. Die in die übrigen Gruppen fallenden Mischungen sind demgegenüber aber keineswegs abzubewerten. Sie weisen ebenfalls die hervorragenden kalorischen Werte auf und sind überall dort mit Vorteil einsetzbar, wo sie im Speicher keine allzu große Schichthöhe ausfüllen müssen, und wo die gespeicherte Wärme innerhalb etwas längerer Zeiträume abgegeben werden kann, beispielsweise im Brauchwasserbereich.

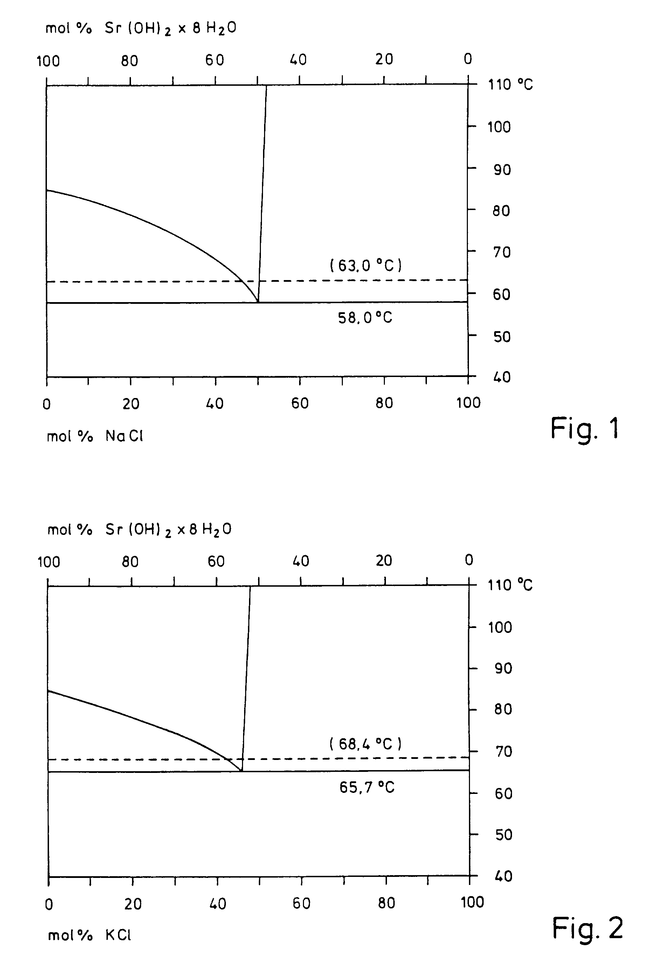

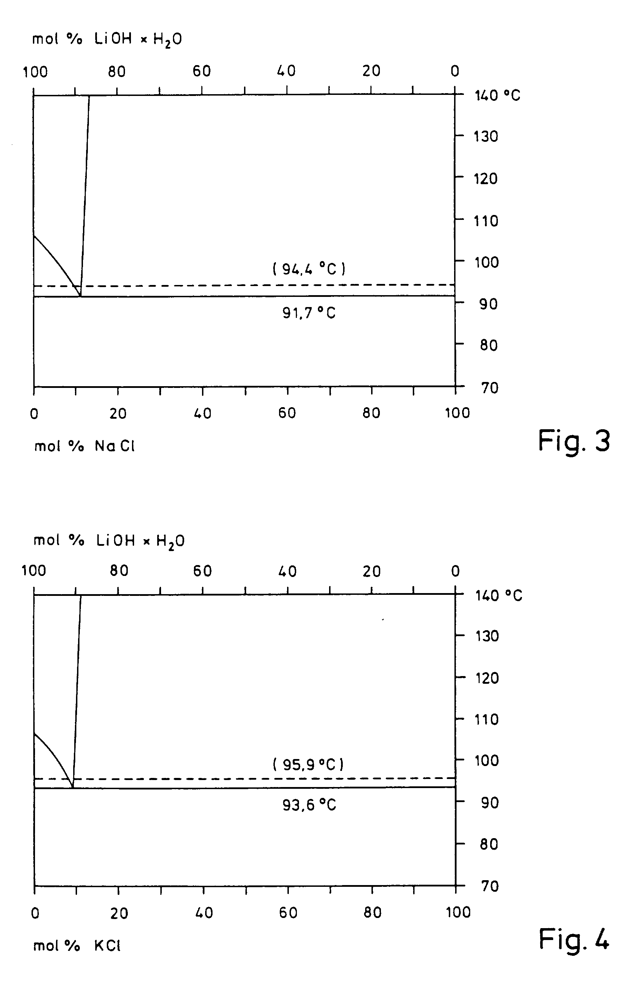

In den zeichnerischen Darstellungen sind die aus Erstarrungskurven gewonnenen Phasendiagramme für die quasibinären Systeme der ersten Gruppe
- Fig. 1: Strontiumhydroxid-Octahydrat/Natriumchlorid
- Fig. 2: Strontiumhydroxid-Octahydrat/Kaliumchlorid
- Fig. 3: Lithiumhydroxid-Monohydrat/Natriumchlorid
- Fig. 4: Lithiumhydroxid-Monohydrat/Kaliumchlorid
dargestellt. Es ist klar zu erkennen, daß sich diese Systeme eutektisch (oder pseudoeutektisch) verhalten, wobei naturgemäß der zum reinen Chlorid verlaufende Kurvenast sehr steil ist. Das Eutektikum liegt für die Systeme auf Basis Strontiumhydroxid-Octahydrat bei einem Molverhältnis von etwa 50:50 und für die Systeme auf Basis Lithiumhydroxid-Monohydrat bei einem Molverhältnis im Bereich von etwa 90:10. Infolge der unterschiedlichen Molekulargewichte ergeben sich für beide Systeme jedoch nahezu die gleichen Gewichtsverhältnisse für das Eutektikum. In den Fig. 1 bis 4 sind jeweils die eutektische Erstarrungstemperatur (ausgezogene Linie) und die eutektische Schmelztemperatur (gestrichelte Linie) angegeben. Die Systeme weisen also eine geringe Hysterese auf. Entsprechendes gilt für die quasiternären Mischungen in dieser Gruppe.

Die Mischungen des Strontiumhydroxid-Octahydrats oder Lithiumhydroxid-Monohydrats mit Natriumchlorid und/oder Kaliumchlorid sind sehr gut für den Einsatz im Bereich der Gebäudeheizung geeignet, um z.B. Solarenergie oder mit Nachtstrom erzeugte Wärmeenergie zu speichern.

Vorteilhaft sind diese Mischungen auch in Latentwärmesenken für Hitzeschutzsysteme zum Zwecke des thermischen Schutzes von temperaturempfindlicher Meßelektronik, z.B. in Durchlauföfen oder in Bohrlochsonden für die geophysikalische Erkundung von Tiefbohrungen einsetzbar, weil sie deutlich geringere Dampfdrücke als die reinen Hydrate aufweisen und dadurch problemlos höheren Temperaturen ausgesetzt werden können, ohne zu einem Bersten des Behältnisses zu führen.

Ein anderes, neuartiges Einsatzgebiet finden diese Mischungen auch in Warmhalteplatten (sog. Rechauds) für Speisen, wie sie in Haushalten und Restaurants üblich sind. Bislang bestehen solche Warmhalteplatten entweder aus aufgeheizten Metallkörpern (Kapazitätswärmespeichern) oder aus elektrisch beheizten Geräten, besitzen also kein großes Speichervermögen und insbesondere keinen Haltepunkt in der Abkühlphase oder stören infolge der erforderlichen elektrischen Zuleitung. Mit den erfindungsgemäßen Mischungen sind demgegenüber Warmhalteplatten möglich, die nach Aufheizung über längere Zeit eine im wesentlichen konstante Temperatur halten, ohne daß dabei elektrische Zuleitungen erforderlich sind.

Im weiteren Verfolg des Erfindungsgedankens werden diese Mischungen und insbesondere eine leicht übereutektische Mischung aus 55 - 65 Mol% Strontiumhydroxid-Octahydrat und 45 - 35 Mol% Kaliumchlorid, die einen Schmelzpunkt in der Größenordnung von 69 °C besitzt, jedoch besonders für die Verwendung in Vorwärmgeräten in Kraftfahrzeugen vorgeschlagen. Hier geht es darum, einen Latentwärmespeicher während der Laufphase des Motors mittels des Motorkühlwassers zu laden und diese Wärmemenge mit möglichst geringen Verlusten über mehrere Tage zu speichern, um beim Kaltstart entweder ein sofortiges Arbeiten der Wagenheizung zu erlauben oder die Kaltstartphase des Motors abzukürzen, um Verschleiß und Emissionen zu reduzieren.

Derartige Geräte befinden sich zur Zeit in der Entwicklung, wobei in Prototypen momentan Bariumhydroxid-Octahydrat versuchsweise als Latentwärmespeichermittel eingesetzt wird. Bariumhydroxid-Octahydrat hat die Nachteile, daß es sehr giftig ist und mit seiner Schmelztemperatur von 78 °C etwas über der als optimal angesehenen Temperatur von etwa 70 °C liegt. Besonders schwerwiegend ist jedoch, daß Bariumhydroxid-Octahydrat mit Aluminium und dessen Legierungen turbulent unter Entstehung von Wärme und Spaltgasen reagiert, wobei Bauteile aus den genannten Leichtmetallen in kurzer Zeit zerstört werden. Da in modernen Kraftfahrzeugen nicht nur Kühler, sondern zum Teil auch die Zylinderköpfe und Motorblöcke aus Aluminium bzw. Aluminiumlegierungen hergestellt sind, würden derartige Baugruppen durch den Austritt von Bariumhydroxid-Octahydrat in den Kühlwasserkreislauf im Falle eines Lecks des Speicherbehälters sehr schnell Schaden nehmen.

Es wurde nun überraschenderweise gefunden, daß der chemische Angriff von Strontiumhydroxid-Octahydrat gegenüber Aluminium, verglichen mit Bariumhydroxid-Octahydrat, quantitativ nur etwa ein Sechsundzwanzigstel ausmacht. Außerdem verläuft ein derartiger Angriff zumindest im Temperaturbereich bis etwa 120 °C nicht turbulent. Dieses unerwartet milde Verhalten von Strontiumhydroxid-Octahydrat gegenüber Aluminium ist bei den erfindungsgemäßen Mischungen z.B. mit Kaliumchlorid zwar geringfügig verschlechtert, beträgt jedoch immer noch deutlich weniger als ein Zehntel des Angriffs von Bariumhydroxid-Octahydrat. Hinzu kommt dabei, daß die erfindungsgemäßen Mischungen der ersten Gruppe "trocken" schmelzen, so daß selbst im Falle eines Lecks keine nennenswerten Mengen an Latentwärmespeichermittel austreten können.

Eine weitere Besonderheit der erfindungsgemäßen Mischungen zwischen Strontiumhydroxid-Octahydrat oder Lithiumhydroxid-Monohydrat und den Chloriden ist die Möglichkeit, die Mischungszusammensetzung vom Eutektikum aus in gewissen Grenzen zu variieren, wobei vorzugsweise der Anteil der genannten Hydroxid-Hydrate leicht über den eutektischen Punkt hinaus vergrößerbar ist, um die Eigenschaften der Mischung, z.B. das Erstarrungsverhalten bzw. die Rekristallisationstemperatur gezielt zu beeinflussen. Die bei diesen Mischungen in der Regel auftretende geringe Unterkühlung von bis zu 2 K kann so entweder zum Teil, vollständig oder auch überkompensiert werden.

Aus den Mischungen der zweiten Gruppe sei besonders auf eine invariante Mischung von Strontiumhydroxid-Octahydrat mit Kaliumnitrat im Molverhältnis 1:1 hingewiesen, für die eine Schmelztemperatur von 59,7 °C und eine Schmelzenthalpie von 315 J/g gefunden wurde. Diese Mischung schmilzt zwar inkongruent, zeichnet sich aber dadurch aus, daß das abgespaltene Kristallwasser (bei nicht allzu großen Schichthöhen) selbsttätig in sehr kurzer Zeit wieder vollständig eingebaut ist. Diese Mischung ist im Brauchwasserbereich, aber auch für Warmhalteplatten und dergl. Anwendungen interessant, wo die verhältnismäßig geringe Schmelztemperatur vorteilhaft ist.

Vorzugsweise werden Mischungen der zweiten Gruppe wie auch Mischungen der dritten Gruppe (die sich überraschenderweise wie Mischungen der zweiten Gruppe und nicht wie solche der ersten Gruppe verhalten) im eutektischen Bereich eingesetzt. Die in der Tabelle angegebenen Beispiele der zweiten Gruppe sind quasieutektisch.

Die Mischungen der vierten Gruppe, also solche aus den beiden Hydroxid-Hydraten ohne Zusatz der Salze, bilden bei einem Molverhältnis in der Größenordnung von 50:50 ein Eutektikum und werden vorzugsweise in einem Mischungsverhältnis nahe dem Eutektikum eingesetzt. Das gleiche gilt auch für Mischungen der fünften Gruppe, d.h. auch wenn der Mischung aus den beiden Hydroxid-Hydraten noch ein Chlorid oder Nitrat zugesetzt wird, sollte das Molverhältnis der beiden Hydroxid-Hydrate zwischen 40 und 60 Mol% liegen. In ihrem Schmelzverhalten ähneln die Mischungen der vierten und fünften Gruppe denen der zweiten und dritten Gruppe. Auch bei Zusatz von Chloriden ergibt sich also bei Mischungen der fünften Gruppe - entgegen einer aus dem Verhalten der ersten Gruppe theoretisch ableitbaren Erwartung - kein "trockenes" Schmelzen, sondern ein inkongruentes Schmelzen bei guter Rekristallisation. Die Erscheinung des "trockenen" Schmelzens ist also überraschend auf die Mischungen der ersten Gruppe beschränkt.

Zusammenfassend wird somit durch die Erfindung eine Familie an Speicherhydrat-Mischungen zur Verfügung gestellt, welche die Auswahl einer Vielzahl von Schmelzpunkten im Bereich von rund 40 °C bis knapp 100 °C ermöglicht, dabei sehr hohe volumenspezifische Schmelzenthalpien besitzt und zyklenfest ist. Im Hinblick auf ihre physiologische Bedenklichkeit sind sie zumindest für die Basis Strontiumhydroxid-Octahydrat verhältnismäßig akzeptabel. Einige der Hauptmischungsbestandteile wie Strontiumhydroxid-Octahydrat, sowie die vorzugsweise vorgeschlagenen Zumischungen aus Natriumchlorid und Kaliumchlorid, ebenso wie z.B. Kaliumnitrat, sind in großen Mengen zu außerordentlich günstigen Kosten verfügbar. Bei einigen der vorgeschlagenen Mischungen ist die Entmischungsneigung vollständig beseitigt, bei anderen so stark verringert, daß sie nicht mehr stört. Das Erstarrungsgefüge ist vorteilhaft feinkristallin, die Volumenänderung beim Phasenübergang in den meisten Fällen relativ klein. Der chemische Angriff gegen Aluminium und dessen Legierungen ist reduziert. Der Dampfdruck einiger Mischungen ist deutlich erniedrigt. Die Unterkühlung beim Rekristallisieren ist extrem klein und reproduzierbar, bzw. mittels der Mischungszusammensetzung einstellbar. Damit sind alle Voraussetzungen für eine verbesserte Leistung und verbesserte Eigenschaften von Latentwärmespeichern geschaffen.

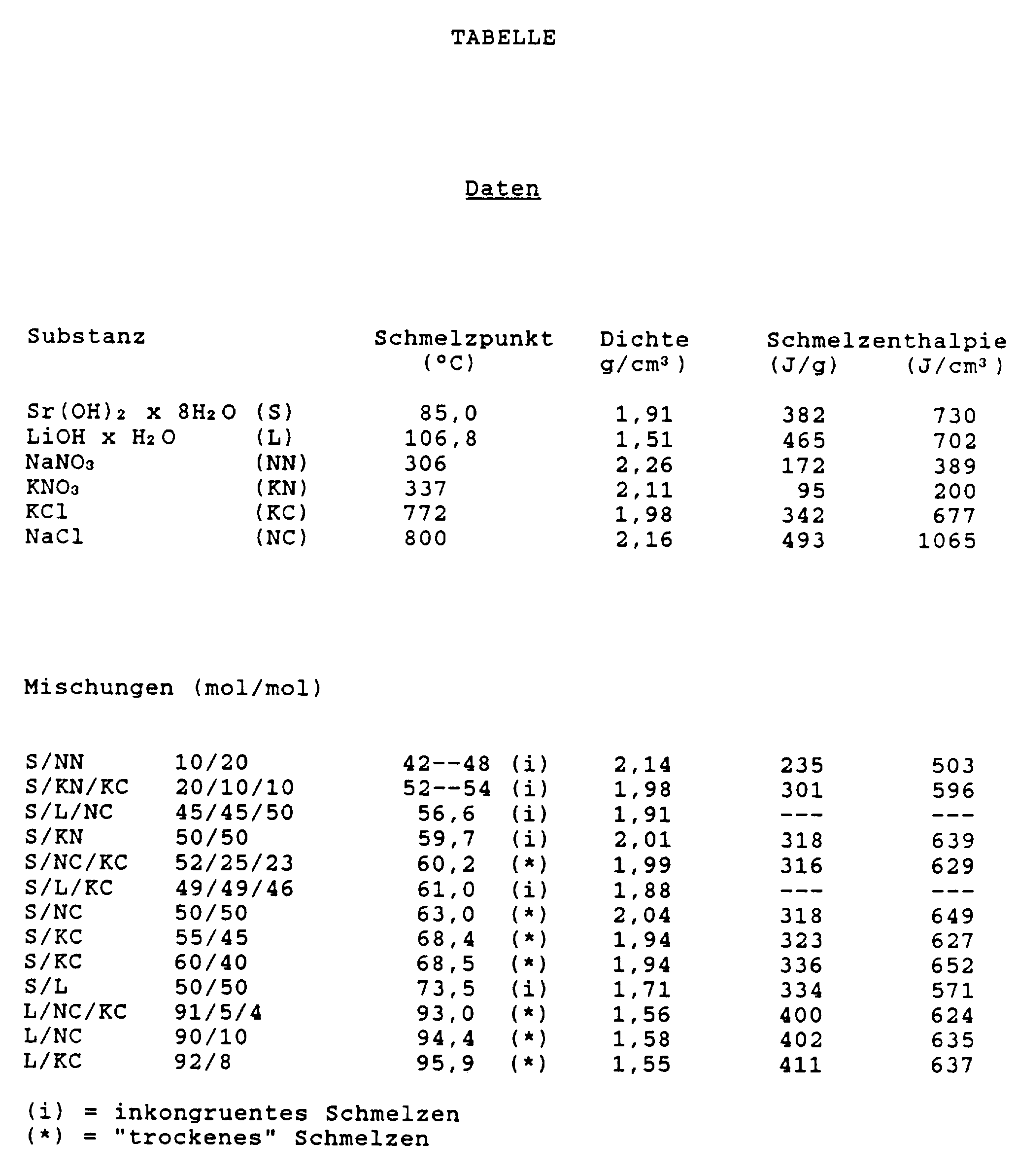

## Patentansprüche

1. Latentwärmespeichermittel auf der Basis von Strontiumhydroxid-Octahydrat oder Lithiumhydroxid-Monohydrat, dadurch gekennzeichnet, daß einem dieser beiden Hydroxid-Hydrate mindestens ein Salz aus der Gruppe der nicht-hydratbildenden Chloride und Nitrate von Alkalimetallen und/oder das andere Hydroxid-Hydrat zugesetzt ist, wobei die Zusatzmengen an dem anderen Hydroxid-Hydrat im Bereich von 40 - 60 Mol%, bezogen auf die Menge des ersten Hydroxid-Hydrats, liegen und die Zusatzmengen an Salz von 5 bis 40 Gew.%, bezogen auf die Gesamtmenge an HydroxId-Hydrat, betragen.

2. Latentwärmespeichermittel nach Anspruch 1, dadurch gekennzeichnet, daß als Chloride Natriumchlorid oder Kaliumchlorid in einer Zusatzmenge von 5 - 25 Gew.%, bezogen auf die Gesamtmenge an Hydroxid-Hydrat, eingesetzt sind.

3. Latentwärmespeichermittel nach Anspruch 1, dadurch gekennzeichnet, daß als Chloride Natriumchlorid und Kaliumchlorid in einem Mischungsverhältnis von 40 - 60 Mol%, bezogen auf die Gesamtmenge an Chlorid, eingesetzt sind.

4. Latentwärmespeichermittel nach Anspruch 2 oder 3, dadurch gekennzeichnet, daß der Mischung eine geringe Überschußmenge bis zu maximal 5 Gew.% an Wasser zugesetzt ist.

5. Latentwärmespeichermittel nach Anspruch 1, dadurch gekennzeichnet, daß als Nitrate Natriumnitrat und/oder Kaliumnitrat in einer Zusatzmenge von 20 - 40 Gew.%, bezogen auf die Gesamtmenge an Hydroxid-Hydrat, eingesetzt sind.

6. Verwendung einer Mischung nach einem der Ansprüche 1 bis 5 als Latentwärmespeichermittel in Speichersystemen zur Nutzwärmespeicherung.

7. Verwendung einer Mischung nach einem der Ansprüche 1 bis 5 als Latentwärmespeichermittel in Vorwärmgeräten für das Motorkühlwasser von Kraftfahrzeugen, wobei die Mischung auf eine Schmelztemperatur im Bereich von 60 - 80 °C eingestellt ist.

8. Verwendung einer Mischung nach einem der Ansprüche 1 bis 5 für den Zweck gemäß Anspruch 7, wobei die Mischung aus 55 - 65 Mol% Strontiumhydroxid-Octahydrat und 45 - 35 Mol% Kaliumchlorid besteht.

9. Verwendung einer Mischung nach einem der Ansprüche 1 bis 5 als Latentwärmespeichermittel in Hitzeschutzsystemen für wärmeempfindliche Instrumente.

10. Verwendung einer Mischung nach einem der Ansprüche 1 bis 5 als Latentwärmespeichermittel in Warmhalteplatten für Speisen.

## Claims

1. A heat transfer composition (phase change material) on the basis of strontium hydroxide octahydrate or lithium hydroxide monohydrate, characterized in that at least one salt selected from the group of non-hydrate forming chlorides or nitrates of alkali metals and/or the other hydroxide hydrate is added to one of the two aforesaid hydroxide hydrates, wherein the supplemental amount of the other hydroxide hydrate is in the range of 40 to 60 mol %, based on the amount of the first hydroxide hydrate, and wherein the supplemental amount of salt is 5 to 40 % by weight, based on the total amount of hydroxide hydrate.

2. A composition according to claim 1 characterized in that sodium or potassium chloride is employed as chloride in a supplemental amount of 5 to 25 % by weight, based on the total amount of hydroxy hydrate.

3. A composition according to claim 1 characterized in that sodium and potassium chloride is employed as chloride in a mixture ratio of 40 to 60 mol %, based on the total chloride content.

4. A composition according to claim 2 or 3, characterized in that a small additional amount of up to 5 % at the most of water is added to the composition.

5. A composition according to claim 1 characterized in that sodium or potassium nitrate is employed as nitrate in a supplemental amount of 20 to 40 % based on the total amount of hydroxide hydrate.

6. The use of a composition according to any of claims 1 - 5 as a heat transfer material in heat storage systems for storing (useful) heating energy.

7. The use of a composition according to any of claims 1 to 5 as a heat transfer material in preheaters for the engine cooling water of automobiles, wherein the composition is adjusted to a melting temperature in the range between 60 to 80° C.

8. The use of a composition according to any of claims 1 to 5 for the purpose according to claim 7, wherein the composition consists of 55 to 65 mol % of strontium hydroxide octahydrate and from 45 to 35 mol % of potassium chloride.

9. The use of a composition according to any one of claims 1 to 5 as a heat transfer material in heat protective systems for protecting heatsensitive instruments.

10. The use of a composition according to any one of claims 1 to 5 as a heat transfer material in hot plates for food.

## Revendications

1. Agent accumulateur de chaleur latente sur la base d'octahydrate d'hydroxyde de strontium ou de monohydrate d'hydroxyde de lithium, **caractérisé en ce** qu'au moins un sel du groupe des chlorures ne formant pas d'hydrates et des nitrates des métaux alcalins et/ou l'autre hydrate d'hydroxyde est ajouté à l'un de ces deux hydrates d'hydroxyde, les quantités d'addition au second hydrate d'hydroxyde étant de l'ordre de 40 à 60 % molaires par rapport à la quantité du premier hydrate d'hydroxyde et les quantités d'addition de sel étant de 5 à 40 % en poids par rapport à la quantité totale d'hydrate d'hydroxyde.

2. Agent accumulateur de chaleur latente selon la revendication 1, caractérisé en ce que l'on utilise comme chlorures du chlorure de sodium ou du chlorure de potassium dans une quantité d'addition de 5 à 25 % en poids par rapport à la quantité totale d'hydrate d'hydroxyde.

3. Agent accumulateur de chaleur latente selon la revendication 1, caractérisé en ce que l'on utilise comme chlorures du chlorure de sodium et du chlorure de potassium dans un rapport de mélange de 40 à 60 % molaires par rapport à la quantité totale de chlorure.

4. Agent accumulateur de chaleur latente selon la revendication 2 ou 3, caractérisé en ce l'on ajoute au mélange une faible quantité d'eau en surplus jusqu'à 5 % en poids maximum.

5. Agent accumulateur de chaleur latente selon la revendication 1, caractérisé en ce que l'on utilise comme nitrates du nitrate de sodium et/ou du nitrate de potassium dans une quantité d'addition de 20 à 40 % en poids par rapport à la quantité totale d'hydrate d'hydroxyde.

6. Utilisation d'un mélange selon l'une des revendications 1 à 5 comme agent accumulateur de chaleur latente dans des systèmes d'accumulation pour l'accumulation de la chaleur utile.

7. Utilisation d'un mélange selon l'une des revendications 1 à 5 comme agent accumulateur de chaleur latente dans des réchauffeurs pour l'eau de refroidissement du moteur d'un véhicule automobile, le mélange étant ajusté à une température de fusion de l'ordre de 60 à 80° C.

8. Utilisation d'un mélange selon l'une des revendications 1 à 5 pour le but selon la revendication 7, le mélange étant constitué par 55 à 65 % molaires d'octahydrate d'hydroxyde de strontium et de 45 à 35 % de chlorure de potassium.

9. Utilisation d'un mélange selon l'une des revendications 1 à 5 comme agent accumulateur de chaleur dans des systèmes de protection contre la chaleur pour des instruments sensibles à la chaleur.

10. Utilisation d'un mélange selon l'une des revendications 1 à 5 comme agent accumulateur de chaleur dans des plaques de maintien à température pour aliments.
